# FASCICULE DE BREVET EUROPEEN

(11) **EP 3 568 803 B1**
(45) Date de publication et mention de la délivrance du brevet: **15.11.2023**
(21) Numéro de dépôt: 18701263.8
(22) Date de dépôt: 09.01.2018
(51) Int. Cl.: B60W 60/00

(54) **PROCÉDÉ DE PILOTAGE D'UN VÉHICULE AUTOMOBILE AUTONOME**
VERFAHREN ZUM STEUERN VON EINEM AUTONOMEN FAHRZEUG
METHOD FOR OPERATING AN AUTONOMOUS VEHICLE

(30) Priorité: 12.01.2017 FR 1750284
(43) Date de publication de la demande: 20.11.2019
(73) Titulaire: Valeo Schalter und Sensoren GmbH, 74321 Bietigheim-Bissingen (DE)
(72) Inventeur: AHIAD, Samia, 74321 Bietigheim-Bissingen (DE); SY, Ronan, 74321 Bietigheim-Bissingen (DE)
(74) Mandataire: Claassen, Maarten Pieter
(86) Numéro de dépôt international: PCT/EP2018/050434
(87) Numéro de publication internationale: WO 2018/130512

(56) Documents cités:
- EP-A1- 2 747 027
- DE-A1-102012 112 802
- US-A1- 2015 094 899
- HAUTIERE N ET AL: "Detection of visibility conditions through use of onboard cameras", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 juin 2005 (2005-06-06), pages 193-198, XP010833966, DOI: 10.1109/IVS.2005.1505101 ISBN: 978-0-7803-8961-8

## Description

### DOMAINE TECHNIQUE AUQUEL SE RAPPORTE L'INVENTION

La présente invention concerne de manière générale les aides à la conduite de véhicules automobiles.

Elle concerne plus particulièrement un procédé de pilotage de moyens de conduite d'un véhicule automobile, lesdits moyens de conduite pouvant être pilotés selon l'un ou l'autre d'au moins deux modes de conduite, à savoir :
- un mode de conduite manuel dans lequel les moyens de conduite sont commandés manuellement, par le conducteur du véhicule automobile, et
- un mode de conduite autonome dans lequel les moyens de conduite sont commandés automatiquement, par une unité de calcul du véhicule automobile.

### ARRIERE-PLAN TECHNOLOGIQUE

Un souci constant lors de la conception de véhicules automobiles est d'en accroître la sécurité.

Dans un premier temps, il a pour cela été développé des systèmes permettant d'aider le conducteur à piloter son véhicule. Il s'agit par exemple de systèmes de détection d'obstacles, permettant de déclencher un freinage d'urgence lorsque le conducteur n'a pas conscience du danger.

On cherche maintenant à développer des systèmes permettant de piloter le véhicule de manière autonome, c'est-à-dire sans intervention humaine. L'objectif est notamment de permettre au conducteur du véhicule de pratiquer une autre activité (lecture, téléphonie...) alors que le véhicule évolue de manière autonome.

Ces systèmes sont opérés grâce à des logiciels de reconnaissance de l'environnement du véhicule, lesquels se basent sur des informations provenant de divers capteurs (caméra, capteur RADAR, ...). Un exemple d'un tel système est divulgué dans le document US 2015/0094899.

Il est des situations dans lesquelles la reconnaissance de l'environnement n'est plus jugée suffisamment satisfaisante pour permettre au véhicule d'évoluer de manière autonome dans le trafic.

Dans ces situations, la solution communément employée consiste à demander au conducteur de reprendre le contrôle du véhicule dans un délai très court.

L'inconvénient de cette solution est que le conducteur ne perçoit alors pas immédiatement très bien l'environnement autour du véhicule. Il existe donc un risque que le conducteur n'ait pas conscience d'un danger et qu'il ne réagisse alors pas correctement.

### OBJET DE L'INVENTION

Afin de remédier à l'inconvénient précité de l'état de la technique, la présente invention propose de tenir compte du niveau de visibilité de l'environnement afin de déterminer si le conducteur sera ou non en mesure de percevoir l'environnement et s'il sera donc en mesure de reprendre le contrôle du véhicule en toute sécurité.

Plus particulièrement, on propose selon l'invention un procédé de pilotage tel que défini dans la revendication 1.

Ainsi, l'invention propose de tenir compte de la visibilité de l'environnement afin de sélectionner l'une ou l'autre au moins de deux modalités de sortie du mode de conduite autonome.

A titre d'exemple, si, à l'étape a), la donnée acquise est une image vue par une caméra, lorsque le niveau de visibilité est bon sur l'ensemble de l'image acquise, il est possible de basculer directement en mode de conduite manuel, en avertissant au préalable le conducteur qu'il doit reprendre le contrôle du véhicule.

En revanche, lorsque le niveau de visibilité est réduit sur une partie au moins de l'image acquise, il est possible de temporiser le retour dans le mode de conduite manuel, en signalant au préalable au conducteur l'existence d'un danger peu visible. Il est également possible de bloquer ce retour dans le mode de conduite manuel, en basculant plutôt dans un mode de conduite dégradé (à vitesse réduite, ...).

D'autres caractéristiques avantageuses et non limitatives du procédé de pilotage conforme à l'invention sont les suivantes :
- le mode de conduite dégradé consiste, pour l'unité de calcul, à commander les moyens de conduite de telle sorte que le véhicule automobile freine ou se déplace à une vitesse réduite et/ou de telle sorte qu'un avertisseur émette un signal avertissant le conducteur d'un potentiel danger et/ou de telle sorte que l'unité de calcul bascule en mode de conduite manuel après un délai strictement supérieur audit délai prédéterminé ;
- entre les étapes b) et c), il est prévu une étape d'évaluation d'un niveau de risque qui est relatif à la capacité du conducteur à avoir conscience d'un potentiel danger, en fonction dudit coefficient de visibilité, et à l'étape c), la modalité de sortie est sélectionnée en fonction au moins du niveau de risque évalué ;
- il est prévu une étape de détection de la position, de la vitesse et de la direction d'obstacles, et ledit niveau de risque est évalué en fonction également de la position, de la vitesse et de la direction de chaque obstacle détecté ;
- il est prévu une étape de détection de la direction du regard du conducteur et ledit niveau de risque est évalué en fonction également de la direction du regard du conducteur ;
- ladite donnée est une image acquise par un capteur d'images orienté vers l'avant du véhicule automobile ;
- à l'étape b), le coefficient de visibilité est calculé compte tenu d'un coefficient global caractérisant la visibilité moyenne de l'environnement sur l'ensemble de l'image acquise ;
- à l'étape b), le coefficient de visibilité est calculé compte tenu d'au moins un coefficient local, caractérisant la visibilité d'une partie déterminée de l'environnement sur l'image acquise ;
- ladite partie déterminée de l'environnement est un obstacle ou une infrastructure routière ; et
- la sortie du mode de conduite autonome est commandée lorsque l'unité de calcul reçoit une consigne d'un moyen de saisie à la disposition du conducteur,

ou lorsqu'elle établit une impossibilité de conduite en mode autonome compte tenu de signaux reçus de capteurs d'environnement.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'un véhicule automobile roulant sur une route ; et
- la figure 2 est une représentation d'une image acquise par un capteur d'images équipant le véhicule automobile de la figure 1.

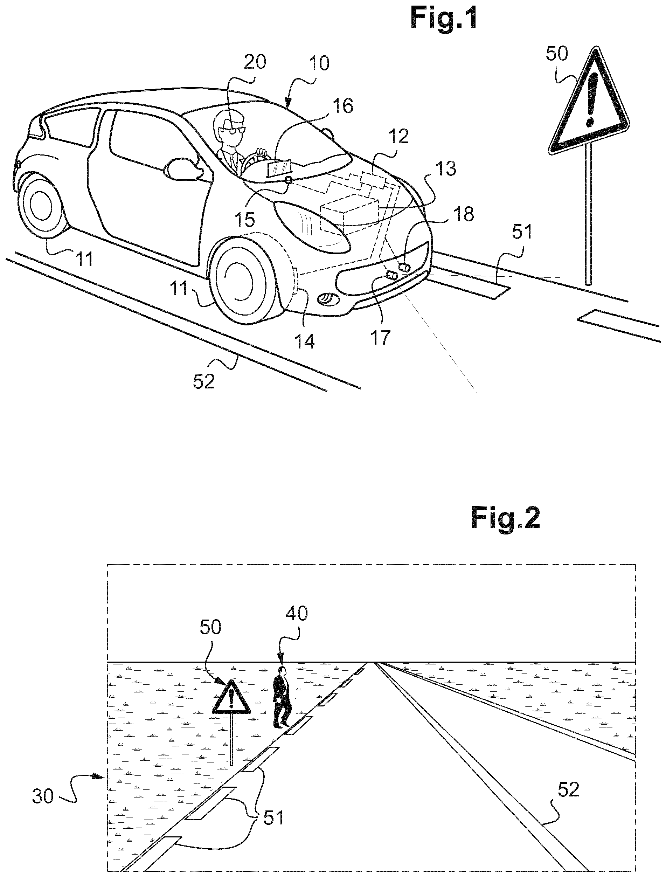

Sur la figure 1, on a représenté un véhicule automobile 10 qui se présente ici sous la forme d'une voiture à quatre roues 11. En variante, il pourrait s'agir d'un véhicule automobile comprenant trois roues, ou davantage de roues.

Classiquement, ce véhicule automobile 10 comporte un châssis qui supporte notamment un groupe motopropulseur 13 (à savoir un moteur et des moyens de transmission du couple exercé parle moteur aux roues motrices), un système de direction 15 (à savoir un volant fixé à une colonne de direction couplée aux roues directrices du véhicule), un système de freinage 14 (à savoir une pédale de freinage connectée à des étriers de freins), des éléments de carrosserie et des éléments d'habitacle.

On notera à titre préliminaire que le groupe motopropulseur 13, le système de direction 15 et le système de freinage 14 forment ce qu'il convient d'appeler des « moyens de conduite », c'est-à-dire des moyens permettant de conduire le véhicule à la vitesse souhaitée, dans la direction souhaitée.

Le véhicule automobile 10 comprend également une unité électronique de commande (ou ECU, de l'anglais "Electronic Control Unit"), appelée ici calculateur 12.

Ce calculateur 12 comprend un processeur et une unité de mémorisation, par exemple une mémoire non-volatile réinscriptible ou un disque dur.

L'unité de mémorisation enregistre notamment des programmes d'ordinateur comprenant des instructions dont l'exécution par le processeur permet la mise en oeuvre par le calculateur du procédé décrit ci-après.

Pour la mise en oeuvre de ce procédé, le calculateur 12 est connecté à différents équipements du véhicule automobile 10.

Parmi ces équipements, le véhicule automobile 10 comprend au moins un capteur d'images 17. Il comprend en outre ici un afficheur tête-haute 16 et au moins un détecteur de distance, par exemple un détecteur RADAR 18.

Le capteur d'images est ici formé par une caméra 17 qui est orientée vers l'avant, de telle sorte qu'elle peut acquérir des images d'une portion de la route se trouvant à l'avant du véhicule.

Cette caméra 17 est ici représentée comme étant fixée dans le bouclier avant du véhicule. En variante, elle pourrait être située autrement, par exemple à l'arrière du pare-brise du véhicule.

Cette caméra 17 est adaptée à acquérir des images d'une portion de la route se trouvant à l'avant du véhicule et à communiquer ces images (ou des données issues de ces images) au calculateur 12 du véhicule.

Grâce aux informations relevées par cette caméra 17 et par le détecteur RADAR 18, le calculateur 12 est en mesure d'appréhender l'environnement situé à l'avant du véhicule.

Le calculateur 12 embarque alors un logiciel permettant de conduire de manière autonome les organes de conduite 13, 14, 15, sans intervention humaine. On dit alors du véhicule automobile 10 qu'il est « autonome ». Différents modes de réalisation de ce logiciel étant déjà connus de l'homme du métier, il ne sera pas ici décrit en détail.

En pratique, le calculateur 12 est plus précisément connecté à des organes de commande des moyens de conduite 13, 14, 15, par exemple à un moteur de direction permettant de commander le système de direction 15, à un servomoteur permettant de commander le système de freinage 14, et à un servomoteur permettant de commander le groupe motopropulseur 13.

Le calculateur 12 est alors programmé de manière à pouvoir basculer entre différentes modes de conduite, parmi lesquels au moins :
- un mode de conduite autonome dans lequel les moyens de conduite 13, 14, 15 sont commandés automatiquement, exclusivement par le calculateur 12, et
- un mode de conduite manuel dans lequel les moyens de conduite 13, 14, 15 sont commandés manuellement, par le conducteur 20 du véhicule automobile 10.

On notera que dans ce mode de conduite manuel, les organes de commande des moyens de conduite 13, 14, 15 pourront éventuellement être pilotés par le calculateur 12 de manière à aider le conducteur à conduire le véhicule (afin d'exercer un freinage d'urgence, ou de limiter la vitesse du véhicule...). Dans ce cas, le calculateur 12 pilotera ces organes de commande en tenant compte des efforts exercés par le conducteur sur le volant et sur les pédales du véhicule.

Dans la suite de cet exposé, on considérera que le calculateur 12 est programmé de manière à pouvoir basculer également dans un troisième mode de conduite, à savoir un mode de conduite dégradé.

Plusieurs variantes de réalisation de ce mode de conduite dégradé peuvent être envisagées.

Dans une première variante, les moyens de conduite 13, 14, 15 peuvent être commandés automatiquement, exclusivement par le calculateur 12, de telle manière que le véhicule freine progressivement.

Dans une autre variante, les moyens de conduite 13, 14, 15 peuvent être commandés automatiquement, exclusivement par le calculateur 12, de telle manière que le véhicule freine puis se stabilise à une vitesse réduite, inférieure à la vitesse à laquelle le véhicule roulerait en mode de conduite autonome.

Dans une autre variante, les moyens de conduite 13, 14, 15 peuvent être commandés en partie par le calculateur 12 et en partie par le conducteur, auquel cas un avertisseur émettra un signal avertissant le conducteur 20 des potentiels dangers détectés. Cet avertisseur pourra par exemple être formé par l'afficheur tête-haute 16, auquel cas le signal pourra prendre la forme d'une image affichée sur l'afficheur tête-haute 16.

L'invention porte alors plus précisément sur la manière selon laquelle le calculateur 12 doit gérer la sortie du mode de conduite autonome.

Il peut en effet arriver que le conducteur souhaite reprendre le contrôle du véhicule, auquel cas il peut par exemple appuyer sur un bouton de désactivation du mode de conduite autonome.

Il peut également arriver que, compte tenu des informations reçues de la caméra 17 et du capteur RADAR 18, le calculateur 12 juge qu'il n'est plus en mesure de conduire le véhicule de manière autonome et qu'il doit sortir du mode de conduite autonome.

Dans ces deux cas, il convient de s'assurer, avant de basculer en mode de conduite manuel, que le conducteur est en mesure de bien appréhender l'environnement pour conduire le véhicule sans danger.

Pour cela, selon une caractéristique particulièrement avantageuse de l'invention, le calculateur 12 met en oeuvre quatre étapes consécutives, à savoir :
- une étape d'acquisition d'au moins une image 30 de l'environnement à l'avant du véhicule automobile 10,
- une étape de calcul d'un coefficient de visibilité Cv d'une partie au moins de l'environnement sur l'image 30 acquise,
- une étape d'évaluation d'un niveau de risque Nr qui est relatif à la capacité du conducteur 20 à avoir conscience d'un potentiel danger, en fonction dudit coefficient de visibilité Cv, et
- une étape de sélection, en fonction dudit niveau de risque Nr, d'une modalité de sortie du mode de conduite autonome, parmi au moins deux modalités de sortie distinctes.

Ici, à titre d'exemple, une première modalité de sortie consiste à basculer en mode de conduite manuel dans un délai court prédéterminé. Une seconde modalité de sortie consiste à basculer en mode de conduite manuel dans un délai plus long. Une troisième modalité de sortie consiste à basculer dans un mode de conduite dégradé.

On peut maintenant décrire plus en détail les quatre étapes précitées.

Au cours de la première étape, le calculateur 12 mémorise des images successives acquises par la caméra 18.

L'une de ces images 30 a été représentée sur la figure 2.

On y observe non seulement la route empruntée par le véhicule, mais également les infrastructures de la route et des obstacles éventuels.

Parmi les infrastructures, on remarque ici un panneau 50, une ligne discontinue 51 sur le côté gauche de la route, et une ligne continue centrale 52.

Parmi les obstacles, on remarque, outre le panneau 50, un piéton 40 qui marche et s'apprête à traverser la route. La vitesse et la direction de chaque obstacle peut être calculée en fonction de la position de cet obstacle sur les images successivement acquises.

Au cours de la seconde étape, le calculateur 12 calcule le coefficient de visibilité Cv sur la dernière image acquise.

Ce coefficient de visibilité pourrait être un coefficient global quantifiant la luminosité moyenne sur l'ensemble de l'image, ce qui permettrait par exemple de distinguer une situation dans laquelle il faut beau et où la luminosité est bonne d'une situation où il fait sombre (nuit, nuageux,...) et où la luminosité est réduite.

En variante, ce coefficient de visibilité pourrait être un coefficient local quantifiant la luminosité d'une partie de l'image, par exemple la luminosité d'un obstacle.

Ici, et de manière préférentielle, le coefficient de visibilité Cv est calculé en fonction :
- d'un coefficient global Cv1 caractérisant la visibilité de l'environnement sur l'ensemble de l'image 30 acquise, et
- de plusieurs coefficients locaux Cv2ᵢ caractérisant la visibilité de différentes parties déterminées de l'image 30 acquise.

Ces parties déterminées de l'image 30 pourront par exemple être les infrastructures de la route et certains des obstacles (ceux qui, compte tenu de leur position, vitesse et direction, risquent de couper la trajectoire du véhicule).

Le calcul du coefficient global Cv1 est bien connu de l'homme du métier. Il est par exemple décrit dans le document EP2747027. Il ne sera donc pas ici décrit plus en détail.

Le calcul de coefficients locaux Cv2ᵢ est également connu de l'homme du métier. Il est par exemple décrit dans le document publié en 2005 par Messieurs Nicolas Hautière, Raphaël Labayrade et Didier Aubert, qui est intitulé « Detection of Visibility condition through use of onboard caméras » (Université Jean Monnet - Saint Etienne).

Le calcul du coefficient de visibilité Cv tient ici compte de ces différents coefficients. Le poids accordé au coefficient global Cv1 et aux coefficients locaux Cv2ᵢ dans le calcul du coefficient de visibilité Cv sera déterminé au cas par cas, en fonction notamment des caractéristiques de l'optique de la caméra 18 et de la sensibilité du capteur optique de cette caméra.

Au cours de la troisième étape, le niveau de risque Nr est évalué en fonction de ce coefficient de visibilité Cv.

Plus le coefficient de visibilité Cv est élevé (c'est-à-dire plus l'environnement est visible), plus le niveau de risque Nr évalué est réduit.

Au contraire, plus le coefficient de visibilité Cv est réduit (c'est-à-dire moins l'environnement est visible), plus le niveau de risque Nr évalué est élevé.

Il est possible de calculer plusieurs niveaux de risque Nr chacun associé à un objet sur la route, puis de considérer dans la suite du procédé le niveau de risque Nr le plus élevé.

Le niveau de risque Nr associé à un objet sur la route est évalué en fonction du temps de réaction estimé du conducteur. Celui-ci dépend du coefficient de visibilité de l'objet en question. Plus le coefficient de visibilité est élevé, plus le temps de réaction du conducteur est bas et donc moins le danger est important.

Le lien entre le coefficient de visibilité et le temps de réaction peut être estimé de façon expérimentale sur un échantillon représentatif de personnes. A titre d'exemple, on peut considérer que le temps de réaction varie entre 1 seconde et 0,5 seconde lorsque le coefficient de visibilité croît, en diminuant tout d'abord très vite puis en se stabilisant autour de la valeur 0,5 seconde (variation de type hyperbolique).

Un exemple simple est non exhaustif consiste à considérer tout objet qui est susceptible de croiser la trajectoire du véhicule et qui est associé à un temps de réaction supérieur à 0.5 s, comme étant dangereux (les objets ne rassemblant pas ces deux critères étant considérés comme non dangereux).

Ainsi, le niveau de risque Nr est évalué en fonction non seulement du coefficient de visibilité Cv, mais aussi en fonction de données autres telles que la position, la vitesse et la direction de chaque obstacle 40 détecté.

Il est par exemple aussi possible de déterminer la direction du regard du conducteur et de calculer le niveau de risque Nr en fonction de cette direction. Le niveau de risque sera alors plus élevé lorsque le conducteur ne regarde pas la route ou lorsqu'il regarde dans une direction opposée à celle des obstacles détectés.

Enfin, au cours de la quatrième étape, le calculateur 12 compare le niveau de risque Nr avec un seuil prédéterminé.

Si ce niveau de risque est inférieur à ce seuil prédéterminé, le calculateur 12 bascule automatiquement en mode de conduite manuel, après un délai court permettant au conducteur de réagir et de rependre le volant en main.

Au contraire, si le niveau de risque est supérieur à ce seuil prédéterminé, le calculateur peut basculer dans l'un des modes de conduite dégradé décrits supra.

En variante, notamment dans le cas où le conducteur a requis la sortie du mode autonome, le calculateur 12 peut choisir de demeurer en mode de conduite autonome au cours d'une durée prolongée (supérieure au « délai court » précité). Il peut y demeurer :
- soit tant que le niveau de risque calculé reste supérieur au seuil,
- soit pendant une durée prédéterminée supérieure au « délai court » précité.

Il est également possible de ne pas mettre en oeuvre d'étape de calcul d'un niveau de risque, mais au contraire de déterminer directement dans quel mode de conduite le calculateur doit basculer en fonction du coefficient de visibilité Cv.

Selon une autre variante de l'invention, on pourra utiliser (en lieu et place de la caméra) un autre type de capteur, pour autant que ce dernier puisse fournir des données exploitables pour déterminer des coefficients de visibilité et des niveaux de risque. A titre d'exemple, ce capteur pourra être un scanner tridimensionnel (plus connu sous le nom anglais « Laser Scanner »).

## Revendications

1. Procédé de pilotage de moyens de conduite (13, 14, 15) d'un véhicule automobile (10), lesdits moyens de conduite (13, 14, 15) pouvant être pilotés selon l'un ou l'autre d'au moins deux modes de conduite, à savoir :
- un mode de conduite manuel dans lequel les moyens de conduite (13, 14, 15) sont commandés manuellement, par le conducteur (20) du véhicule automobile (10), et
- un mode de conduite autonome dans lequel les moyens de conduite (13, 14, 15) sont commandés automatiquement, par une unité de calcul (12) du véhicule automobile (10),
dans lequel, à la sortie du mode de conduite autonome, il est prévu des étapes :
a) d'acquisition d'au moins une donnée (30) représentative de l'environnement à l'avant du véhicule automobile (10),
b) de calcul d'un coefficient de visibilité (Cv) d'une partie au moins de l'environnement sur la base de ladite donnée (30), et
c) de sélection, en fonction dudit coefficient de visibilité (Cv), d'une modalité de sortie du mode de conduite autonome, parmi au moins deux modalités de sortie distinctes, **caractérisé en ce que** ladite modalité de sortie consiste à basculer automatiquement en mode de conduite manuel après un délai prédéterminé, et une autre modalité de sortie consiste à basculer dans un mode de conduite dégradé.

2. Procédé de pilotage selon la revendication précédente, dans lequel le mode de conduite dégradé consiste, pour l'unité de calcul (12), à commander les moyens de conduite (13, 14, 15) de telle sorte que le véhicule automobile (10) freine ou se déplace à une vitesse réduite et/ou de telle sorte qu'un avertisseur (16) émette un signal avertissant le conducteur (20) d'un potentiel danger et/ou de telle sorte que l'unité de calcul (12) bascule en mode de conduite manuel après un délai strictement supérieur audit délai prédéterminé.

3. Procédé de pilotage selon l'une des revendications précédentes, dans lequel :
- entre les étapes b) et c), il est prévu une étape d'évaluation d'un niveau de risque (Nr) qui est relatif à la capacité du conducteur (20) à avoir conscience d'un potentiel danger, en fonction dudit coefficient de visibilité (Cv), et
- à l'étape c), la modalité de sortie est sélectionnée en fonction au moins du niveau de risque (Nr) évalué.

4. Procédé de pilotage selon la revendication précédente, dans lequel il est prévu une étape de détection d'obstacles (40) et de détermination de la position, de la vitesse et de la direction de chaque obstacle (40) détecté, et dans lequel ledit niveau de risque (Nr) est évalué en fonction également de la position, de la vitesse et de la direction de chaque obstacle (40) détecté.

5. Procédé de pilotage selon l'une des deux revendications précédentes, dans lequel il est prévu une étape de détection de la direction du regard du conducteur (20) et dans lequel ledit niveau de risque (Nr) est évalué en fonction également de la direction du regard du conducteur (20).

6. Procédé de pilotage selon l'une des revendications précédentes, dans lequel ladite donnée (30) est une image acquise par un capteur d'images orienté vers l'avant du véhicule automobile (10).

7. Procédé de pilotage selon la revendication précédente, dans lequel, à l'étape b), le coefficient de visibilité (Cv) est calculé compte tenu d'un coefficient global (Cv1) caractérisant la visibilité moyenne de l'environnement sur l'ensemble de l'image (30) acquise.

8. Procédé de pilotage selon l'une des deux revendications précédentes, dans lequel, à l'étape b), le coefficient de visibilité (Cv) est calculé compte tenu d'au moins un coefficient local (Cv2i), caractérisant la visibilité d'une partie déterminée de l'environnement sur l'image (30) acquise.

9. Procédé de pilotage selon la revendication précédente, dans lequel ladite partie déterminée de l'environnement est un obstacle (40) ou une infrastructure routière (50, 51, 52).

10. Procédé de pilotage selon l'une des revendications précédentes, dans lequel la sortie du mode de conduite autonome est commandée lorsque l'unité de calcul (14) reçoit une consigne d'un moyen de saisie à la disposition du conducteur et/ou lorsque l'unité de calcul (14) établit une impossibilité de poursuivre la conduite en mode de conduite autonome compte tenu de signaux reçus de capteurs d'environnement.

## Patentansprüche

1. Verfahren zur Steuerung von Fahrmitteln (13, 14, 15) eines Kraftfahrzeugs (10), wobei die Fahrmittel (13, 14, 15) nach dem einen oder dem anderen von mindestens zwei Fahrmodi gesteuert werden können, und zwar:
- einem manuellen Fahrmodus, bei dem die Fahrmittel (13, 14, 15) vom Fahrer (20) des Kraftfahrzeugs (10) manuell gesteuert werden, und
- einem autonomen Fahrmodus, bei dem die Fahrmittel (13, 14, 15) von einer Recheneinheit (12) des Kraftfahrzeugs (10) automatisch gesteuert werden,
bei dem, beim Verlassen des autonomen Fahrmodus, die folgenden Schritte vorgesehen sind:
a) Erfassen mindestens eines Datenelements (30), das für das Umfeld an der Vorderseite des Kraftfahrzeugs (10) repräsentativ ist,
b) Berechnen eines Sichtbarkeitskoeffizienten (Cv) mindestens eines Teils des Umfelds auf der Grundlage des Datenelements (30) und
c) Wählen, in Abhängigkeit von dem Sichtbarkeitskoeffizienten (Cv), einer Art des Verlassens des autonomen Fahrmodus unter mindestens zwei verschiedenen Arten des Verlassens, **dadurch gekennzeichnet, dass** die Art des Verlassens darin besteht, nach einer vorbestimmten Zeit automatisch in den manuellen Fahrmodus umzuschalten, und eine andere Art des Verlassens darin besteht, in einen Not-Fahrmodus umzuschalten.

2. Verfahren zur Steuerung nach dem vorhergehenden Anspruch, bei dem der Not-Fahrmodus für die Recheneinheit (12) darin besteht, die Fahrmittel (13, 14, 15) so zu steuern, dass das Kraftfahrzeug (10) bremst oder sich mit einer verminderten Geschwindigkeit bewegt, und/oder so, dass eine Warneinrichtung (16) ein Signal ausgibt, das den Fahrer (20) vor einer möglichen Gefahr warnt, und/oder so, dass die Recheneinheit (12) nach einer Zeit, die strikt größer als die vorbestimmte Zeit ist, in den manuellen Fahrmodus umschaltet.

3. Verfahren zur Steuerung nach einem der vorhergehenden Ansprüche, bei dem:
- zwischen den Schritten b) und c) ein Schritt des Einschätzens eines Risikoniveaus (Nr) vorgesehen ist, das sich auf die Fähigkeit des Fahrers (20) bezieht, sich einer möglichen Gefahr bewusst zu sein, in Abhängigkeit von dem Sichtbarkeitskoeffizienten (Cv), und
- im Schritt c) die Art des Verlassens mindestens in Abhängigkeit von dem eingeschätzten Risikoniveau (Nr) gewählt wird.

4. Verfahren zur Steuerung nach dem vorhergehenden Anspruch, bei dem ein Schritt des Erkennens von Hindernissen (40) und des Ermittelns der Position, der Geschwindigkeit und der Richtung jedes erkannten Hindernisses (40) vorgesehen ist und bei dem das Risikoniveau (Nr) auch in Abhängigkeit von der Position, der Geschwindigkeit und der Richtung jedes erkannten Hindernisses (40) eingeschätzt wird.

5. Verfahren zur Steuerung nach einem der beiden vorhergehenden Ansprüche, bei dem ein Schritt des Erkennens der Blickrichtung des Fahrers (20) vorgesehen ist und bei dem das Risikoniveau (Nr) auch in Abhängigkeit von der Blickrichtung des Fahrers (20) eingeschätzt wird.

6. Verfahren zur Steuerung nach einem der vorhergehenden Ansprüche, bei dem das Datenelement (30) ein Bild ist, das von einem zur Vorderseite des Kraftfahrzeugs (10) hin ausgerichteten Bildsensor erfasst wird.

7. Verfahren zur Steuerung nach dem vorhergehenden Anspruch, bei dem im Schritt b) der Sichtbarkeitskoeffizient (Cv) unter Berücksichtigung eines globalen Koeffizienten (Cv1) berechnet wird, der die mittlere Sichtbarkeit des Umfelds auf dem gesamten erfassten Bild (30) kennzeichnet.

8. Verfahren zur Steuerung nach einem der beiden vorhergehenden Ansprüche, bei dem im Schritt b) der Sichtbarkeitskoeffizient (Cv) unter Berücksichtigung mindestens eines lokalen Koeffizienten (Cv2ᵢ) berechnet wird, der die Sichtbarkeit eines bestimmten Teils des Umfelds auf dem erfassten Bild (30) kennzeichnet.

9. Verfahren zur Steuerung nach dem vorhergehenden Anspruch, bei dem der bestimmte Teil des Umfelds ein Hindernis (40) oder eine Straßeninfrastruktur (50, 51, 52) ist.

10. Verfahren zur Steuerung nach einem der vorhergehenden Ansprüche, bei dem das Verlassen des autonomen Fahrmodus gesteuert wird, wenn die Recheneinheit (14) eine Anweisung eines dem Fahrer zur Verfügung stehenden Eingabemittels empfängt und/oder wenn die Recheneinheit (14) unter Berücksichtigung von Signalen, die von Umfeldsensoren empfangen werden, eine Unmöglichkeit feststellt, die Fahrt im autonomen Fahrmodus fortzusetzen.

## Claims

1. Method for controlling means of driving (13, 14, 15) a motor vehicle (10), said driving means (13, 14, 15) being able to be controlled according to one or other of at least two driving modes, namely:
- a manual driving mode in which the driving means (13, 14, 15) are controlled manually, by the driver (20) of the motor vehicle (10), and
- an autonomous driving mode in which the driving means (13, 14, 15) are controlled automatically, by a computation unit (12) of the motor vehicle (10),
in which, on exiting the autonomous driving mode, the following steps are provided:
a) acquisition of at least one item of data (30) representing the environment in front of the motor vehicle (10),
b) computation of a coefficient of visibility (Cv) of at least a portion of the environment on the basis of said item of data (30), and
c) selection, as a function of said coefficient of visibility (Cv), of a way of exiting from the autonomous driving mode, from among at least two separate ways of exiting, **characterized in that** said way of exiting consists of automatically switching into the manual driving mode after a predetermined time, and another way of exiting consists of switching into a degraded driving mode.

2. Control method according to the preceding claim, wherein the degraded driving mode consists, for the computation unit (12), of controlling the driving means (13, 14, 15) in such a way that the motor vehicle (10) brakes or moves at a slow speed and/or in such a way that an alarm (16) emits a signal warning the driver (20) of a potential danger and/or in such a way that the computation unit (12) switches into manual driving mode after a time strictly longer than said predetermined time.

3. Control method according to either of the preceding claims, wherein:
- between steps b) and c), there is provided a step of evaluation of a level of risk (Nr) which is relative to the capability of the driver (20) to be aware of a potential danger, as a function of said coefficient of visibility (Cv), and
- in step c), the way of exiting is selected as a function of at least the evaluated level of risk (Nr).

4. Control method according to the preceding claim, wherein there is provided a step of detection of obstacles (40) and of determination of the position, of the speed and of the direction of each detected obstacle (40), and wherein said level of risk (Nr) is evaluated also as a function of the position, of the speed and of the direction of each detected obstacle (40).

5. Control method according to one of the two preceding claims, wherein there is provided a step of detection of the direction in which the driver (20) is looking and wherein said level of risk (Nr) is evaluated also as a function of the direction in which the driver (20) is looking.

6. Control method according to one of the preceding claims, wherein said item of data (30) is an image acquired by an image sensor oriented towards the front of the motor vehicle (10).

7. Control method according to the preceding claim, wherein, in step b), the coefficient of visibility (Cv) is computed taking account of an overall coefficient (Cv1) characterizing the average visibility of the environment over the whole of the acquired image (30).

8. Control method according to one of the two preceding claims, wherein, in step b), the coefficient of visibility (Cv) is computed taking account of at least a local coefficient (Cv2ᵢ), characterizing the visibility of a determined portion of the environment on the acquired image (30).

9. Control method according to the preceding claim, wherein said determined portion of the environment is an obstacle (40) or a road infrastructure (50, 51, 52).

10. Control method according to one of the preceding claims, wherein the exiting from the autonomous driving mode is commanded when the computation unit (14) receives an instruction from an input means available to the driver and/or when the computation unit (14) establishes an impossibility of continuing driving in autonomous driving mode taking account of signals received from environment sensors.
